# EUROPÄISCHE PATENTANMELDUNG

(11) **EP 1 037 348 A1**
(43) Veröffentlichungstag der Anmeldung: **20.09.2000**
(21) Anmeldenummer: 00105729.8
(22) Anmeldetag: 17.03.2000
(51) Int. Cl.: H02B 1/38

(54) **Schaltschrank**

(30) Priorität: 18.03.1999 DE 19912246
(71) Anmelder: Skeppner, Hans, 1050 Brüssel (BE)
(72) Erfinder: Pochet, Luc, 1170 Brussels (BE)
(74) Vertreter: Grünecker, Kinkeldey, Stockmair & Schwanhäusser Anwaltssozietät

(57) **Zusammenfassung**

Die Erfindung betrifft einen Schaltschrank mit einem Schaltschrankrahmen aus Profilstreben und an den Profilstreben angebrachten Wandelementen, wie Decken-, Tür-, Seiten-, Rückwand- oder Bodenelementen. Ein solcher Schaltschrank soll konstruktiv verbessert werden. Hierzu weisen die Profile des Elementrahmens im Wesentlichen eine W-Form auf, wobei zumindest eines der Wandelemente einen mit dem Schaltschrankrahmen verbindbaren Elementrahmen umfaßt, der eine Füllung aus mindestens einer Paneele aufweist, wobei die Profile des Elementrahmens im Wesentlichen eine W-Form aufweisen, wobei der eine äußere W-Schenkel verlängert ist und an seinem freien Ende die Nut zur Aufnahme der Paneele eingeformt ist, und durch die W-Form eine Griffnut auf der der Paneele abgewandten Seite gebildet ist.

## Beschreibung

Die Erfindung betrifft einen Schaltschrank nach dem Oberbegriff von Anspruch 1.

Aus der DE 295 14 997 U1 ist ein Schaltschrank mit einem Schaltschrankrahmen, der aus vier vertikalen Profilstreben und jeweils vier Streben für den Deckenrahmen und den Bodenrahmen geformt ist, bekannt. Während die Deckenwand, die Rückwand und die Seitenwände in aller Regel vollständig geschlossen sind, verbleibt der Boden des Schaltschranks in den meisten Anwendungsfällen offen. Allerdings kann der Boden auch geschlossen sein sowie Seitenwände weggelassen werden, sofern mehrere Schaltschrankrahmen nebeneinander angeordnet werden. Die vordere Öffnung ist von einer über Scharniere am Schaltschrankrahmen angebrachten Tür abgedeckt.

Insbesondere die Vertikalprofilstreben können jeweils mindestens eine vertikale Lochreihe mit Löcher gleicher Größe und gleichem Abstand auf, die zur Befestigung von Ein- und/oder Anbauten dienen. Da Schaltschränke für die unterschiedlichsten Anwendungszwecke verwendet werden, kann es sich hier um die unterschiedlichsten Einbauteile handeln. Eines ist diesen gemeinsam, sie sind auf das von der Größe der Löcher und dem Abstand derselben vorgegebene Teilungsmaß zur Befestigung angewiesen. Anstelle von Löchern können auch Rastnuten oder ähnliches in vorbestimmten Abständen vorgesehen sein. Um eine möglichst einheitliche Ausgestaltung zu erzielen, ist das verwendete Teilungsmaß bei vielen Schaltschränken gleich, so daß Unterteilungen nur als teilfaches oder Vielfaches dieses Teilmaßes vorgenommen werden können. Oftmals werden die Profilstreben auch mit Markierungen oder Maßstreifen versehen, damit eine Orientierung zur Anbringung der Ein- und/oder Anbauten gegeben ist. All diese Maßnahmen sind sehr hilfreich und erleichtern die Anordnung entsprechender Elemente.

Des Weiteren sind aus der DE 295 14 997 U1 Paneelelemente bekannt, die in einen Ausbruch der Schaltschranktür einsetzbar sind, wobei jedem Einschub, Einsatz oder jeder Gerätegruppe ein Paneelelement zugeordnet ist.

Aus der DE 42 42 589 A1 ist ein Paneelaufbau für eine Schranktür beschrieben. Dieses weist einen Rahmen aus Profilelementen und eine in diesen einsetzbare und festgehaltene Platte auf. Das innere Rahmenprofil weist einen Absatz zum Einsetzen der Platte sowie mehrere Vorsprünge auf. Zwei der Vorsprünge dienen zum Befestigen der äußeren Abdeckleiste, die dem ganzen Rahmen ein glattes Aussehen verleiht und darüber hinaus die Platte in dem Absatz des inneren Profils hält. Die beiden anderen Vorsprünge dienen als Versteifungselemente.

Es ist daher die Aufgabe der vorliegenden Erfindung, einen Schaltschrank der eingangs genannten Art zu verbessern.

Diese Aufgabe wird erfindungsgemäß durch einen Schaltschrank mit den Merkmalen des Anspruchs 1 gelöst.

Die Profile des Elementrahmens weisen im Wesentlichen eine W-Form auf, wobei der eine äußere W-Schenkel verlängert ist und an seinem freien Ende die Nut zur Aufnahme der Paneele eingeformt ist. Durch die W-Form ist automatisch auch ein Handgriff auf der Außenseite des Profils geformt. Darüber hinaus läßt sich durch eine geschwungene W-Form die Sicherheit aufgrund Vermeidens von Stoßkanten erhöhen. Der eine W-Schenkel dient dann zur Halterung der Paneele. Insbesondere, wenn ein Wandelement als Tür verwendet wird, erweist es sich als sehr vorteilhaft, wenn die Profile des Elementrahmens eine Griffnut auf der den Paneele abgewandten Seite aufweisen. Diese Griffnut kann über die gesamte Länge des Profils angeordnet werden, so daß unabhängig von der Größe des Benutzers immer eine ergonomisch günstige Griffposition eingehalten werden kann.

Darüber hinaus können die Stoßkanten der Paneele automatisch eine Markierung vorgeben, anhand derer sich der Monteur orientieren und entsprechende Einbauten vornehmen kann. Neben den dadurch für Schaltschränke erzielbaren eigenwilligen Design, kann nunmehr auf zusätzliche Markierungen zur Anbringung der Bauteile verzichtet werden, da durch die Konstruktion bzw. den Aufbau des Wandelementes an sich automatisch eine solche erzeugt wird. Entsprechend der Bestellung eines Kunden, kann die Bestückung des Wandelementes mit geeigneten Paneele unterschiedlichen Maßes erfolgen, die aufgrund ihrer Anordnung innerhalb des Elementrahmens auch die Anordnung innerhalb des Schaltschranks indizieren.

Obwohl auch eine Unterteilung in Breitenrichtung des Schaltschrankes vorgesehen werden kann, ist es bevorzugt, daß mehrere Paneele in ihrer Längserstreckung horizontal nebeneinander angeordnet sind.

Zur Erzielung einer ausreichenden Dichtheit des Wandelementes, können die Seitenkanten der Paneele mittels Nut und Feder ineinandergreifen.

Bevorzugt kann das Teilungsmaß 44,45 mm (1,7 inch) betragen. Entsprechend den zugehörigen Einbauten, kann das entsprechende Maß der Paneele diesem Teilungsmaß entsprechen oder ein Teil- oder Vielfaches von diesem sein. Unter teil- oder vielfachem wird insgesamt in dieser Anmeldung das Teilen oder Multiplizieren mit einer ganzen Zahl verstanden.

Die Markierwirkung kann noch dadurch verbessert werden, daß zumindest eine Paneele eine zu den anderen Paneele unterschiedliche Farbe aufweist. Insbesondere kann auch schon von außen anhand der unterschiedlich farbigen Paneele der Inhalt des Schaltschrankes erkannt werden.

Es besteht aber auch die Möglichkeit, daß mindestens eine Paneele aus einem durchsichtigen Material besteht. Bevorzugt wird eine solche Paneele für solche Zwecke verwendet, wo in diesem Bereich des Schaltschranks ablesbare Meßinstrumente oder ähnliche zu überwachende Gegenstände angeordnet sind.

Ein ähnlicher Effekt kann auch dadurch erzielt werden, daß mindestens eine Paneele aus einem anderen Material als die anderen Paneele hergestellt ist. Hierdurch wird ebenfalls die Anzeigewirkung verbessert.

Des weiteren kann der Elementrahmen eine im wesentlichen umlaufende Nut aufweisen, in der die Paneele gehalten sind. Mittels einer Nut lassen sich die Paneele auswechselbar einschieben, so daß bei der Herstellung sowie bei einem nachträglichen Auswechseln keine besonderen Vorkehrungen getroffen werden müssen. Des weiteren läßt sich hierdurch ein sicheres Halten erzielen. Eine Dichtung kann zusätzlich in diesem Bereich angeordnet sein.

Günstigerweise kann der Elementrahmen aus Aluminium-Strangpreßprofilen bestehen. Dieses eröffnet die Möglichkeit, unterschiedlich ausgestaltete, teilweise auch sehr komplizierte Profile kostengünstig herzustellen, die eine entsprechende Halterung der Paneele sicher zulassen.

Des weiteren kann der andere äußere W-Schenkel als Federarm ausgestaltet sein, der im geschlossenen Zustand des Schaltschranks federnd auf eine Profilstrebe aufdrückt. Neben einer dadurch ebenfalls erzielbaren Dichtwirkung besteht die Möglichkeit, daß dieser Federarm im Zusammenspiel mit einem Scharnier eine Tür des Schaltschranks in ihrer geschlossenen Stellung hält und diese erst nach Überschreiten eines bestimmten Federwegs entlastet, so daß beim Türschließen, sich die Tür am Ende der Schließbewegung von selbst zuzieht.

Um eine Dichtwirkung zu verbessern, kann der Federarm an seinem freien Ende ein Dichtungselement aufweisen. Dieses Dichtungselement kann angeformt oder in einer entsprechend an dem Federarm eingeformten Nut eingelegt sein.

Bevorzugterweise kann zwischen dem verlängerten äußeren W-Steg und dem nächstliegend mittleren W-Steg nach außen hin verschlossene Befestigungsstellen, z.B. für Scharniere, angeordnet sein. Hierdurch lassen sich die Profile sowohl für normale, starr fixierte Seitenwände oder Rückwände als auch für die Tür verwenden.

Eine einfache Form der Ausgestaltung der Befestigungsstellen besteht darin, daß die Befestigungsstellen von Profillängsnuten gebildet sind, in die entsprechend ausgeformte Anbauteile im wesentlichen paßgenau einsetzbar sind. Hierdurch wird eine formschlüssige Anbringung dieser zusätzlichen Bauteile, z.B. eines Scharniers, und somit ein sicheres Halten verwirklicht.

Um eine sichere Verankerung derartiger Anbauteile sicherzustellen, kann eine der Profilnuten zackenprofilierte Seitenwände derart aufweisen, daß an beliebiger Stelle eine zugehörige Schraube in die Nut einschraubbar ist. Das Zackenprofil entspricht demnach einem Gewindeprofilquerschnitt. Dieses läßt sich z.B. durch ein Aluminiumstrangpreßprofil sehr einfach herstellen und darüber hinaus besteht der Vorteil, daß die Schraube an beliebiger Stelle einschraubbar ist. Damit die Schraube sicher gehalten wird, sollte noch eine bestimmte Klemmwirkung durch die Seitenwände der Nut vorhanden sein. Es besteht aber auch die Möglichkeit eine normale Nut zu verwenden, in die dann eine Schraube mit Schneidgewinde eingedreht wird.

Im folgenden werden Ausführungsbeispiele der Erfindung anhand einer Zeichnung naher erläutert. Es zeigen:
- Fig. 1: Einen Schaltschrank in einer perspektivischen Darstellung,
- Fig. 2: einen Schaltschrankrahmen des Schaltschrankes aus Fig. 1 in einer Vorderansicht,
- Fig. 3: den Schaltschrankrahmen aus Fig. 2 in einer Seitenansicht,
- Fig. 4: eine vertikale Profilstrebe des Schaltschrankrahmens aus Fig. 2 und 3 in einer vergrößerten Vorderansicht,
- Fig. 5: die Profilstrebe aus Fig. 4 in einer Draufsicht,
- Fig. 6: einen Eckbereich der Türanbringung einer Ausführungsform des Schaltschranks in einer Querschnittsdarstellung,
- Fig. 7: eine Variante der Türanbringung in ähnlicher Darstellung wie Fig. 6 und
- Fig. 8: die Befestigungsstelle einer Seitenwand des Schaltschranks im Querschnitt.

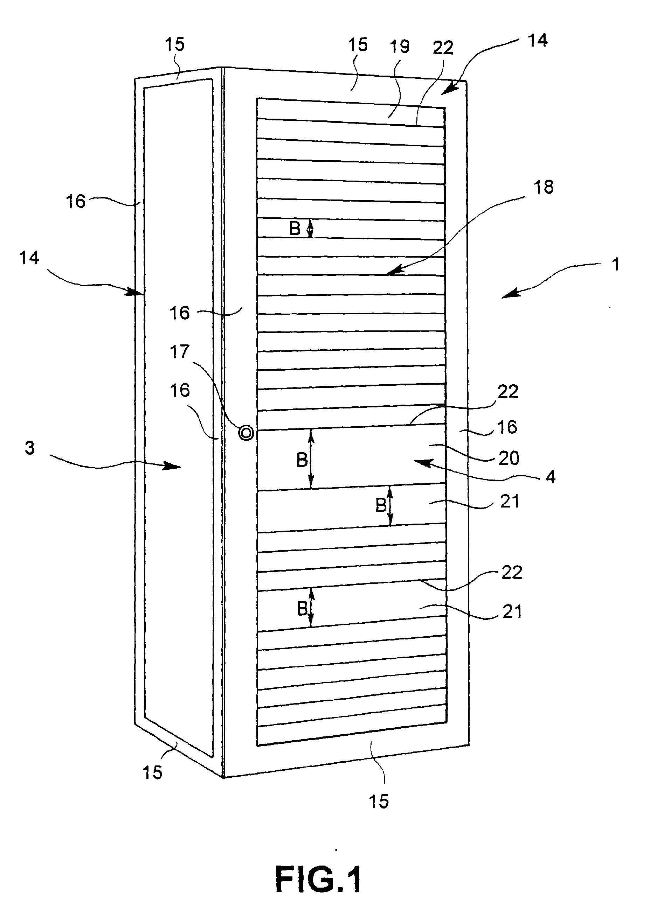

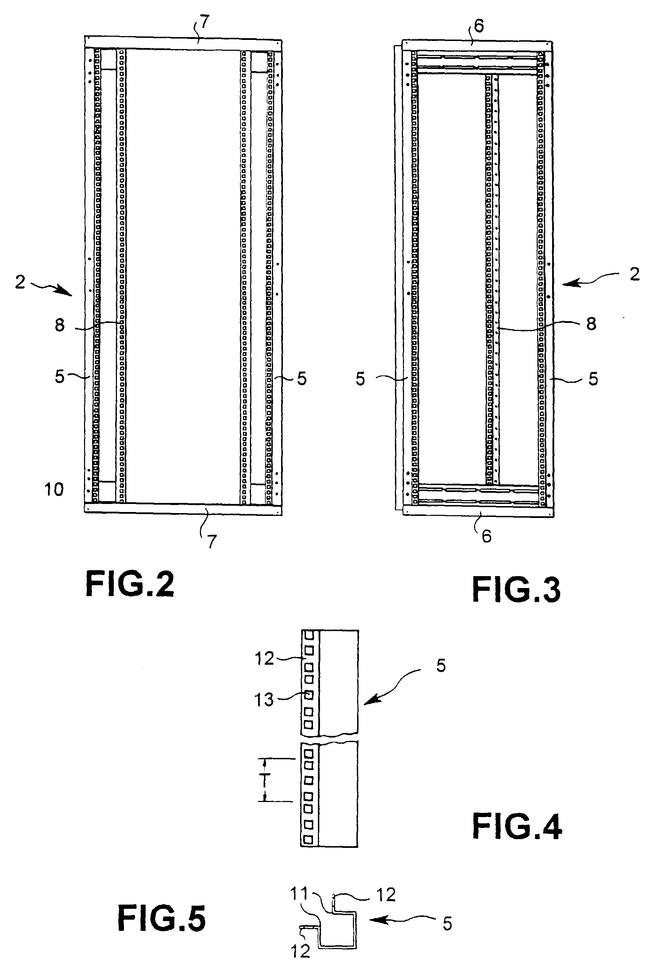

Der in Fig. 1 dargestellte Schaltschrank 1 umfaßt einen Schaltschrankrahmen 2, der in den Fig. 2 und 3 näher dargestellt ist. An dem Schaltschrankrahmen 2 sind verschiedene Wandelemente angeordnet. In Fig. 1 ist eine Seitenwand 3 und eine Tür 4 dargestellt. Sämtlichen anderen Seitenwände sind ebenfalls mit entsprechenden Elementen geeigneter Größe abgedeckt. Die Abdeckung des Bodens ist optional und ist nicht zwingend erforderlich. Der Schaltschrankrahmen 2 besteht zumindest aus den vier vertikalen Profilstreben 5, den vier Seitenstreben 6 und den vier Querstreben 7. Jeweils zwei Seitenstreben 6 und zwei Querstreben 7 bilden den Deckenbzw. Bodenrahmen. Zusätzlich sind etwas versetzt nach hinten noch Haltestreben 8 im Schaltschrankinnenraum angeordnet. Entsprechende Deckenleisten 9 bzw. Bodenleisten 10 sorgen u.a. für den geeigneten Abstand der Haltestreben 8.

Im vorliegenden Ausführungsbeispiel sind die Vertikalstreben 5 aus einem an einer Ecke offenen Vierkanthohlprofil gebildet (siehe Fig. 5). An den freien Enden 11 der offenen Seite des Vertikalstrebenproflis sind jeweils Befestigungsleisten 12 über die gesamte Länge der Vertikalstreben 5 angeordnet. Diese Befestigungsleisten 12 verlaufen jeweils parallel zu den zugehörigen Seitenflächen des Schaltschranks 1. An diesen Befestigungsleisten 12 werden die einzelnen Wandelemente angebracht. Des weiteren dienen die Befestigungsleisten 12 zum Anbringen von Einbauten im Schaltschrank 1. Der Einfachheit halber sind in den Figuren keine Einbauten dargestellt. Die Befestigungsleisten 12 sind mit einem vorbestimmten Lochmuster mit den Löchern 13 ausgestattet. Die Löcher 13 haben eine vorbestimmte Größe und eine zueinander genau festgelegte Anordnung bzw. festgelegten Abstand. Dabei ist es, wie in Fig. 4 zu sehen ist, nicht unbedingt nötig, daß der Abstand zwischen den einzelnen Löchern 13 immer gleich ist. Wichtig ist jedoch hingegen, daß sich aufgrund eines wiederkehrenden Musters ein Teilungsmaß ergibt. Das Teilungsmaß ist in Fig. 4 mit der Bezugziffer T gekennzeichnet. Das Teilungsmaß T gibt vor, in welchen Abstufungen Ein- bzw. Anbauten an und in dem Schaltschrank integriert werden können. Auch die Größenabstimmungen derartiger Ein- bzw. Anbauten richtet sich nach diesem Teilungsmaß T. Das bedeutet, daß diese Anbauten in Stufenschritten, die abhängig von diesem Teilungsmaß T sind, im Schaltschrank angeordnet werden. Diese Stufenschritte können ein ganzzahliges Teil- oder Vielfaches des Teilungsmaßes T sein. Die in dieser Ausführungsform verwendeten Löcher 13 sind im Querschnitt quadratisch. Es können aber in anderen Ausführungsformen sowohl Löcher mit anderen Querschnittsformen als auch Lochreihen mit gleichen Abständen verwendet werden.

Jedes Wandelement, in Fig. 1 sind die Seitenwand 3 und die Tür 4 eingezeichnet, besteht aus einem umlaufenden Elementrahmen 14, der eine obere und untere Querstrebe 15 und zwei parallele Seitenstreben 16 umfaßt. Die Rahmenstreben 15 und 16 sind bevorzugt jeweils von gleichem Querschnitt und können durch ein Aluminiumstrangpreßprofil erzeugt werden. In der linken Vertikalstrebe 16 ist ein Schloß 17 angeordnet. Die Füllung 18 des Elementrahmen 14 besteht aus parallel zu den Querstreben 15 verlaufenden Paneele 19, 20, 21. Die Paneele 19, 20, 21 bestehen bevorzugt aus einem Kunststoffmaterial und sind im wesentlichen plattenförmig. Das bedeutet, daß sie im Querschnitt rechteckförmig sind und die Form eines langgestreckten Quaders aufweisen. Es besteht auch die Möglichkeit, diese mit Nut und Feder zu versehen, so daß sie ineinandergesteckt werden können. Zwischen zwei angrenzenden Paneele 19 oder 20 oder 21 entsteht eine Stoßfuge 22. Die sichtbare Breite B (siehe Fig. 1) ist dem Teilungsmaß T der Befestigungsleiste 12 angepaßt und ist entweder gleich groß oder entspricht einem ganzzahligen teil- oder vielfachem von diesem. Hierdurch ergibt sich durch die Stoßfuge 22 sowohl auf der Außenseite als auch auf der Innenseite der Tür 4 eine Markierung, die auf eine entsprechende Anbringposition im Inneren des Schaltschranks hindeutet. In Fig. 1 ist aus Vereinfachungsgründen lediglich die Tür 4 mit solchen Paneele 19, 20, 21 dargestellt. Jedoch können auch die Seitenwände 3 oder eine nicht näher dargestellte Rückwand einen solchen Aufbau aufweisen. Es ist ebenfalls zu erkennen, daß die Paneele 19, 20, 21 jeweils unterschiedliche Breiten B in Abhängigkeit der Höhe der Einbauten haben.

Was in den Schwarz-Weiß-Zeichnungen nicht so deutlich dargestellt werden kann, ist die Möglichkeit, unterschiedliche Farben für die Paneele 19, 20, 21 zu verwenden. Dabei können nicht nur Paneele unterschiedlicher Breite, unterschiedliche Farben aufweisen, sondern auch Paneele gleicher Breite unterschiedliche Farben haben. Des weiteren besteht auch die Möglichkeit, für die Paneele 19, 20, 21 unterschiedliche Materialien zu verwenden. Eine besondere Kombination besteht in einer Verwendung von undurchsichtigen und durchsichtigen Paneele. Bevorzugt sind die durchsichtigen Paneele dort angeordnet, wo ein Einblick in den Schaltschrank ohne das Öffnen der Tür 4 einen Vorteil bringt, z.B. zum Ablesen von Meßinstrumenten oder ähnlichem. Da die Paneele an das Teilungsmaß T angepaßt sind, wird dann eine solche durchsichtige Paneele auch exakt an der entsprechenden Stelle eines solchen Einbaus mit Anzeigeelementen angeordnet sein.

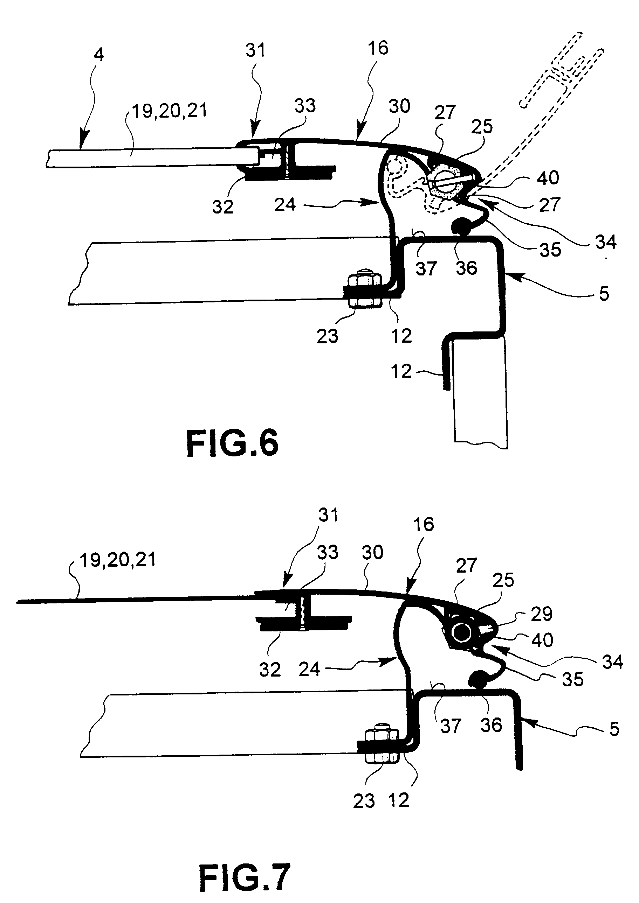

Anhand der Fig. 6 bis 8 werden nunmehr einige Befestigungsquerschnitte für solche Paneele dargestellt.

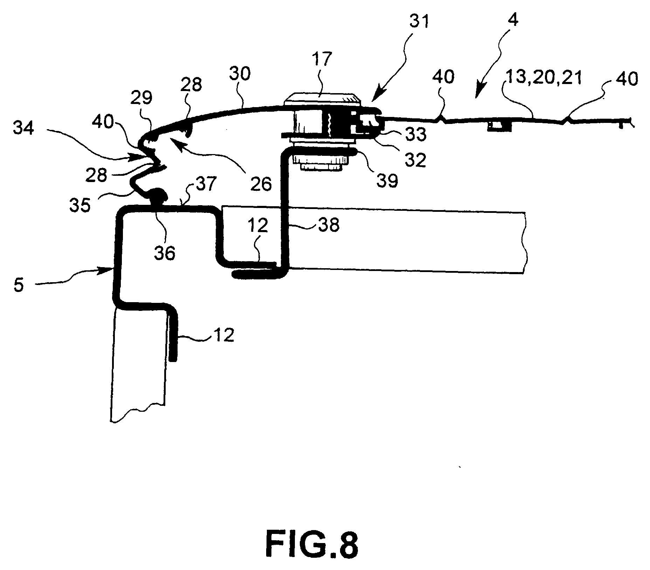

In Fig. 6 ist zu erkennen, daß an der Vertikalstrebe 5 des Schaltschrankrahmens 2 mittels einer Schraube 23 eine Scharnierhalterung 24 für das Scharnier 25 angeordnet ist. Das Scharnier 25 weist einen sechskantförmigen Außenquerschnitt auf und ist in eine entsprechend ausgeformte Nut 26 auf der Innenseite der Vertikalstrebe 16 einsetzbar Seitliche Stifte 27 und entsprechende weitere Ausformungen 28 sorgen für einen weiteren Halt des Scharniers 25. Am Grund der Nut 26 befindet sich eine Zusatznut 29, deren Seitenwände ein seitliches Zackenprofil aufweisen, das einem Gewindeprofilquerschnitt nachempfunden ist. Hierdurch läßt sich eine Schraube in die Zusatznut 29 einschrauben. Dabei sind die Wände der Zusatznut 29 so eng aneinander angeordnet, daß zusätzlich noch eine Klemmwirkung gegeben ist, so daß die Schraube sich nicht seitlich verschiebt. Der Aufbau der Nuten 26 und 29 ist sehr gut in Fig. 8 zu erkennen.

Die Vertikalstrebe 5 weist im wesentlichen eine W-Form auf, wobei ein äußerer W-Schenkel 30 verlängert ist und an seinem freien Ende 31 eine Anformung 32 mit einer Aufnahmenut 33 aufweist. In die Aufnahmenut 33 sind die Stirnseitenbereiche der Paneele 19, 20, 21 einsetzbar Die Aufnahmenut 33 kann einstückig durch die Anformung 32 geformt oder durch eine separat anschraubbare Leiste zusammen mit dem äußeren W-Schenkel 30 gebildet sein. Dies erleichtert das Einlegen und Vor-positionieren der Paneele 19, 20, 21. Die Einbuchtung 34 der W-Form am äußeren Ende der Vertikalstrebe 16 dient auf der dem Scharnier 25 abgewandten Seite der Tür als formschönder Handgriff, weshalb insbesondere die Tür mit keinem weiteren Handgriff mehr versehen werden muß. Selbstverständlich macht sich diese Einbuchtung 34 auf der dem Scharnier 25 gegenüberliegenden Seite eher bemerkbar. Allerdings ist die Form des Profils für die Vertikalstreben 16 so gewählt, daß das Profil auch für die anderen Streben des Elementrahmens 14 verwendbar ist.

An dem den Paneele 19, 20, 21 abgewandten äußeren W-Schenkel 35 ist eine Dichtung 36 angeordnet, die durch die Federeigenschaft des W-Schenkels 35 federnd auf die Außenseite 37 der Vertikalstrebe 5 aufgedrückt ist. Anhand der gestrichelt dargestellten Öffnungsstellung der Tür 4, ist zu erkennen, daß sich der W-Schenkel 35 mit der Dichtung 36 im Uhrzeigersinn schwenken läßt. Das bedeutet, daß durch die Halterung 24 das Scharnier 25 soweit von der Außenfläche 37 der Vertikalstrebe 5 angeordnet ist, daß dies im Rahmen der zulässigen Federbewegung des W-Schenkels 35 zulässig ist. Hierdurch wird am Ende der Türschließbewegung ein automatisches Zudrücken der Tür 4 und entsprechend federndes Andrücken der Dichtung 36 erzielt. Die in dem Ausführungsbeispiel 6 verwendeten Paneele sind Paneele aus Vollmaterial und weisen eine der Aufnahmenut 33 angepaßte Dicke auf.

Das Ausführungsbeispiel gemäß der Fig. 7 unterscheidet sich lediglich dadurch, daß die verwendeten Paneele 19, 20, 21 lediglich aus einem Flachmaterial hergestellt sind, das an den Seitenrändern entsprechende Anformungen zum sicheren Halten in der Aufnahmenut 33 aufweist. Ansonsten bleibt der Aufbau gleich.

In der Fig. 8 ist eine gegenüberliegende Seite eines weiteren Ausführungsbeispiels mit Tür 4 dargestellt. Das bedeutet, daß die Einbuchtung 34 an dieser Stelle als Handgriff zum Öffnen der Tür verwendet wird. An der Befestigungsleiste der Vertikalstrebe 5 ist ein Doppelwinkelprofil 38 (im wesentlichen S-förmig) angebracht, an dessen äußerem Schenkel 39 Öffnungen zum Arretieren des Schloßes 17 angebracht sind. Das Schloß 17 kann demnach wahlweise mit dem äußeren Schenkel 39 gekoppelt werden oder nicht.

Weil auf dieser Seite kein Scharnier 25 angeordnet ist, kann sehr gut der Aufbau der Nutformen zwischen dem äußeren, verlängerten W-Schenkel 30 und dem nächstliegenden mittleren Schenkel 40 erkannt werden.

Als Paneele 19, 20, 21 ist in diesem Fall ein profiliertes Kunststoffelement verwendet, was neben einer horizontalen Markierung auch noch eine vertikale Markierung 40 aufweist. Bevorzugt werden diese Art der Paneele 19, 20, 21 ebenfalls aus Kunststoff hergestellt.

Der Vollständigkeit halber sei erwähnt, daß bei den Ausführungsbeispielen der Fig. 7 und 8 bei Verwendung gleicher Bezugsziffern auf die Beschreibung des Ausführungsbeispiels 6 verwiesen wird.

Es ist ersichtlich, daß eine Reihe unterschiedlich ausgestalteter Paneele in entsprechend ausgestaltete Elementrahmen einsetzbar sind. Diese erfüllen die erfindungsgemäße Funktion so lange, sofern sie an das Teilungsmaß T, was zur Anbringung von Einbauten in Schaltschränken von entscheidender Bedeutung ist, angepaßt sind. Es versteht sich auch von selbst, daß geeignete Materialien hierfür verwendet werden und falls eine Abdichtung der Paneele zueinander erforderlich ist, so läßt sich dies durch Nut- und Federverbindungen oder durch Einlegen entsprechender Dichtungen erreichen.

## Patentansprüche

1. Schaltschrank mit einem Schaltschrankrahmen (2) aus Profilstreben (5,6,7) und an den Profilstreben (5,6,7) angebrachten Wandelementen, wie Decken-, Tür- (4), Seiten- (3), Rückwand- oder Bodenelementen, wobei zumindest eines der Wandelemente (4) einen mit dem Schaltschrankrahmen (2) verbindbaren Elementrahmen (14) umfaßt, der eine Füllung (18) aus mindestens einer Paneele (19,20,21) aufweist, **dadurch gekennzeichnet,** dass die Profile (15,16) des Elementrahmens (14) im wesentlichen eine W-Form aufweisen, wobei der eine äußere W-Schenkel (30) verlängert ist und an seinem freien Ende (31) die Nut (33) zur Aufnahme der Paneele (19,20,21) eingeformt ist, und durch die W-Form eine Griffnut (34) auf der der Paneele (19,20,21) abgewandeten Seite gebildet ist.

2. Schaltschrank nach Anspruch 1, **dadurch gekennzeichnet,** dass zumindest zwei Profilstreben (5) Befestigungsstellen (12,13) aufweisen, die einen Einbau von Ein- und/oder Anbauten in einem vorbestimmten Teilungsmaß (T) mit vorgegebenen gleichen Stufenschritten und/oder einem Vielfachen dieser Stufenschritte ermöglichen, und dass die sichtbare Breite (B) jeder Paneele (19,20,21) dem Teilungsmaß (T) oder einem Teil- oder Vielfachen von diesem entspricht,

3. Schaltschrank nach Anspruch 1 oder 2, **dadurch gekennzeichnet,** dass mehrere Paneele (19,20,21) in ihrer Längserstreckung horizontal nebeneinander angeordnet sind.

4. Schaltschrank nach einem der Ansprüche 1 bis 3, **dadurch gekennzeichnet,** dass die Seitenkanten der Paneele (19,20,21) mittels Nut und Feder ineinandergreifen.

5. Schaltschrank nach einem der Ansprüche 1 bis 4, **dadurch gekennzeichnet,** dass das Teilungsmaß (T) 44,45 mm (1,7 inch) beträgt.

6. Schaltschrank nach einem der Ansprüch 1 bis 5, **dadurch gekennzeichnet,** dass zumindest eine Paneele (19,20,21) eine zu anderen Paneele (19,20,21) unterschiedliche Farbe aufweist.

7. Schaltschrank nach einem der Ansprüche 1 bis 6, **dadurch gekennzeichnet,** dass mindestens eine Paneele (19,20,21) aus einem durchsichtigen Material besteht.

8. Schaltschrank nach einem der Ansprüche 1 bis 7, **dadurch gekennzeichnet,** dass mindestens eine Paneele (19,20,21) aus einem anderen Material als die anderen Paneele (19,20,21) hergestellt ist.

9. Schaltschrank nach einem der Ansprüche 1 bis 8, **dadurch gekennzeichnet,** dass der Elementrahmen (14) eine im wesentlichen umlaufende Nut (33) aufweist, in der die Paneele (19,20,21) gehalten sind.

10. Schaltschrank nach einem der Ansprüche 1 bis 9, **dadurch gekennzeichnet,** dass der Elementrahmen (14) aus Aluminium-Strangpreßprofilen besteht.

11. Schaltschrank nach Anspruch 10, **dadurch gekennzeichnet,** dass der andere äußere W-Schenkel (35) als Federarm ausgestaltet ist, der im geschlossenen Zustand des Schaltschranks federnd auf eine Profilstrebe (5) aufdrückt.

12. Schaltschrank nach Anspruch 11, **dadurch gekennzeichnet,** dass der Federarm (35) an seinem freien Ende ein Dichtungselement (36) aufweist.

13. Schaltschrank nach Anspruch 11 oder 12, **dadurch gekennzeichnet,** dass zwischen dem verlängerten äußeren W-Steg (30) und dem nächstliegenden mittleren W-Steg (40) nach außen hin verschlossene Befestigungsstellen (26,29), z.B. für Scharniere (25), angeordnet sind.

14. Schaltschrank nach Anspruch 13, **dadurch gekennzeichnet,** dass die Befestigungsstellen (26) von Profillängsnuten gebildet sind, in die entsprechend ausgeformte Anbauteile (25) im wesentlichen paßgenau einsetzbar sind.

15. Schaltschrank nach Anspruch 14, **dadurch gekennzeichnet,** dass eine der Profilnuten (29) zackenprofilierte Seitenwände derart aufweist, so daß an beliebiger Stelle eine zugehörige Schraube in die Nut (29) einschraubbar ist.
